# EUROPEAN PATENT APPLICATION

(11) **EP 4 446 474 A1**
(43) Date of publication of application: **16.10.2024**
(21) Application number: 22904308.8
(22) Date of filing: 08.12.2022
(51) Int. Cl.: C25B 9/75, C25B 1/04, C25B 9/00

(54) **INTERNAL MANIFOLD TYPE BIPOLAR ELECTROLYSIS ELEMENT, ELECTROLYTIC CELL, AND METHOD FOR PRODUCING HYDROGEN**

(30) Priority: 10.12.2021 JP 2021201250
(71) Applicant: Asahi Kasei Kabushiki Kaisha, Tokyo 1000006 (JP)
(72) Inventor: WATANABE, Akira, Tokyo 100-0006 (JP); SUZUKI, Yusuke, Tokyo 100-0006 (JP); UCHINO, Yousuke, Tokyo 100-0006 (JP); FUJIMOTO, Norikazu, Tokyo 100-0006 (JP)
(74) Representative: dompatent von Kreisler Selting Werner - Partnerschaft von Patent- und Rechtsanwälten mbB
(86) International application number: PCT/JP2022/045369
(87) International publication number: WO 2023/106381

(57) **Abstract**

An internal manifold-type bipolar electrolysis element structured from an anode, a cathode, a partition wall, and an outer frame, and having a manifold, wherein at least a part of the surface of the manifold is covered with a manifold covering member, and the manifold covering member is integrated with a gasket.

## Description

### TECHNICAL FIELD

The present disclosure relates to an internal manifold-type bipolar electrolysis element, an electrolyzer including the internal manifold-type bipolar electrolysis element, and a method of producing hydrogen using the electrolyzer.

### BACKGROUND

In recent years, techniques utilizing renewable energy, such as wind power generation and photovoltaic power generation, have attracted attention in order to address issues including global warming due to greenhouse gases such as carbon dioxide, decrease in fossil fuel reserves, and the like.

The nature of renewable energy is that it is subject to very large fluctuations as its output depends on climatic conditions. It is thus not always possible to transport electric power obtained by electricity generation by renewable energy to the general electric power system, and there is concern about social influences such as imbalance of electricity supply and demand, destabilization of the electric power system, or the like.

Therefore, research is being conducted to convert the electric power generated from renewable energy into a form suitable for storage and transportation for utilization. Specifically, a study has been made on how to generate storable and transportable hydrogen by electrolysis of water using electric power generated from renewable energy, and to use hydrogen as an energy source or material.

Hydrogen is widely used industrially in the fields of, for example, petroleum refining, chemical synthesis, and metal refining, and in recent years, it can be used in many scenes such as hydrogen stations for fuel cell vehicles (FCVs), smart communities, and hydrogen power plants. Accordingly, there is high expectation for the development of technology to obtain, in particular, hydrogen from renewable energy.

Methods for electrolysis of water include solid polymer electrolyte water electrolysis, high-temperature steam electrolysis, and alkaline water electrolysis. Of these, alkaline water electrolysis is regarded as one of the most promising because of its industrialization over decades, large-scale availability, and inexpensiveness as compared to other water electrolysis systems.

However, for adaptation of alkaline water electrolysis as a means for storing and transporting energy in the future, it is necessary that water electrolysis can be carried out efficiently and stably utilizing electric power, which, as mentioned above, has large fluctuations in output. Therefore, there is a need to solve various problems of electrolysis cells and apparatuses for alkaline water electrolysis.

In alkaline water electrolysis, water is reduced at the cathode during electrolysis, and OH⁻ produced by the reaction diffuses through the diaphragm to the anode. Even inside the manifold, which is the piping for supplying an electrolyte, some OH⁻ moves through the manifold to the anode because of ionic conductivity through the electrolyte. At that time, ion current flows in the direction opposite to the flow of OH⁻. Such ion current flowing through the manifold is called leakage current. Leakage current flows through the manifold, driven by the potential difference between the anodes or cathodes of a plurality of water electrolysis elements during electrolysis. The flow of leakage current may lead to deterioration of gas purities (oxygen concentration in hydrogen and hydrogen concentration in oxygen) due to the generation of impurity gases and current efficiency. Deterioration of the gas purities due to the generation of impurity gases caused by the leakage current is a phenomenon that occurs not only in water electrolysis. For example, in brine electrolysis, this leads to deterioration of the gas purities (the oxygen concentration in hydrogen, the hydrogen concentration in chlorine, and the oxygen concentration in chlorine).

One method to address these issues is a method by lining with a highly chemical-resistant electrical insulating material such as fluoropolymers. For example, PTL 1 discloses the method of lining the liquid-contacting surfaces of gas-liquid boxes with a fluorocarbon resin. When this method is used for a manifold, the generation of impurity gases caused by the leakage current can be prevented, and high electrolytic efficiency can be retained for a long period of time.

### CITATION LIST

### Patent Literature

PTL 1: WO 2018/182005 A1

### SUMMARY

### (Technical Problem)

However, even resin linings such as those disclosed in PTL 1 can cause interfacial delamination due to differences in linear expansion coefficients with the cell structure and fluid friction at the ends of the lining. When interfacial delamination occurs, the entire cell needs to be replaced, which can be rather costly. In addition, since the electrolysis facility is typically required to be shut down for a period of time during the replacement of the cell, the operating rate of the electrolyzer reduces.

Therefore, an object of the present disclosure is to suppress the generation of impurity gases caused by the leakage current, to control the output by varying the electrolysis current according to the fluctuation of the load, to retain high efficiency and production of high purity hydrogen for a long period of time, to facilitate maintenance of components, and to shorten the shutdown period of an electrolyzer.

### (Solution to Problem)

The gist of the present disclosure is as follows
[1] An internal manifold-type bipolar electrolysis element structured from an anode, a cathode, a partition wall, and an outer frame, and comprising a manifold,
   at least a part of a surface of the manifold being covered with a manifold covering member, and
   the manifold covering member being integrated with a gasket.
[2] The internal manifold-type bipolar electrolysis element according to [1], being an internal manifold-type bipolar water electrolysis element.
[3] The internal manifold-type bipolar electrolysis element according to [1], being an internal manifold-type bipolar alkaline water electrolysis element.
[4] The internal manifold-type bipolar electrolysis element according to any one of [1] to [3], wherein at least a part of surfaces of manifolds of a cathode terminal element and an anode terminal element is covered with the manifold covering member.
[5] The internal manifold-type bipolar electrolysis element according to any one of [1] to [4], wherein the manifold covering member is detachable.
[6] The internal manifold-type bipolar electrolysis element according to any one of [1] to [5], wherein the manifold covering member is made of at least an insulating material.
[7] The internal manifold-type bipolar electrolysis element according to any one of [1] to [6], wherein the manifold covering member is made of at least one material selected from the group consisting of a rubber material and polytetrafluoroethylene.
[8] The internal manifold-type bipolar electrolysis element according to any one of [1] to [6], wherein the manifold covering member is made of a rubber material.
[9] The internal manifold-type bipolar electrolysis element according to any one of [1] to [8], wherein a resin spacer is disposed outside of the gasket and a compressive elastic modulus of the resin spacer is greater than a compressive elastic modulus of the gasket.
[10] An internal manifold-type bipolar electrolyzer comprising the internal manifold-type bipolar electrolysis element according to any one of [1] to [9] and a diaphragm stacked via the gasket to form an electrolysis cell.
[11] The internal manifold-type bipolar electrolyzer according to [10], wherein the manifold is disposed outside of the diaphragm.
[12] The internal manifold-type bipolar electrolyzer according to [10] or [11], wherein inlet piping and outlet piping are connected to the anode terminal element.
[13] A method of producing hydrogen comprising using the internal manifold-type bipolar electrolyzer according to any one of [10] to [12].
[14] The method of producing hydrogen according to [13], wherein a pressure in the electrolysis cell during electrolysis operation is 3 to 4000 kPa.
[15] The method of producing hydrogen according to [13] or [14], wherein a power supply for supplying electric power is a power supply relying on at least one renewable energy output selected from the group consisting of wind, solar, hydraulic, tidal, wave, ocean current, and geothermal power outputs.
[16] A gasket to be incorporated in an internal manifold-type bipolar electrolyzer comprising a manifold,
   at least a part of a surface of the manifold being covered with a manifold covering member, and
   the gasket being integrated with the manifold covering member.
[17] A gasket to be incorporated in an internal manifold-type bipolar alkaline water electrolyzer comprising a manifold,
   at least a part of a surface of the manifold being covered with a manifold covering member, and
   the gasket being integrated with the manifold covering member.
[18] The gasket according to [16] or [17], wherein the manifold covering member is made of at least one material selected from the group consisting of a rubber material and polytetrafluoroethylene.
[19] The gasket according to [16] or [17], wherein the manifold covering member is made of a rubber material.

### (Advantageous Effect)

According to the present disclosure, the generation of impurity gases caused by the leakage current can be suppressed, the output can be controlled by varying the electrolysis current according to the fluctuation of the load, and high efficiency and production of high-purity hydrogen can be retained for a long period of time.

In addition, because working time is significantly reduced, and the electrolysis shutdown period is minimized, not to mention that industrial production can be easily achieved, maintenance of components is facilitated, and the replacement of the entire electrolyzer frame is not required.

### BRIEF DESCRIPTION OF THE DRAWINGS

FIG. 1 is a diagram schematically illustrating one example of an electrolysis apparatus of the present embodiment;
FIG. 2 is a diagram illustrating an overall view of one example of an electrolyzer of the electrolysis apparatus of the present embodiment;
FIG. 3 is a plan view of one example of a bipolar electrolysis element in the electrolyzer of an internal manifold-type electrolysis apparatus of the present embodiment;
FIG. 4A is a diagram illustrating a part of the cross section of the one example of the internal manifold-type bipolar electrolysis element in the electrolyzer of the internal manifold-type electrolysis apparatus illustrated in FIG. 3 when cut by the plane along the line A-A;
FIG. 4B is a diagram illustrating a state where a manifold covering member integrated with a gasket and a resin spacer are attached to the bipolar electrolysis element illustrated in FIG. 4A;
FIG. 5 is a diagram illustrating one example of a manifold covering member integrated with a gasket of the present embodiment;
FIG. 6 is a diagram illustrating a part of the cross section of internal manifold-type electrolyzers of examples when cut in the same manner as in FIG. 4; and
FIG. 7 is a diagram illustrating a part of the cross section of internal manifold-type electrolyzers of the examples and comparative examples when cut in the same manner as in FIG. 4.

### DETAILED DESCRIPTION

The following provides a detailed description of an embodiment of the present disclosure (hereinafter referred to as "the present embodiment"). The present disclosure is, however, not limited to the embodiments disclosed herein, and various modifications can be made within the spirit and scope of the disclosure.

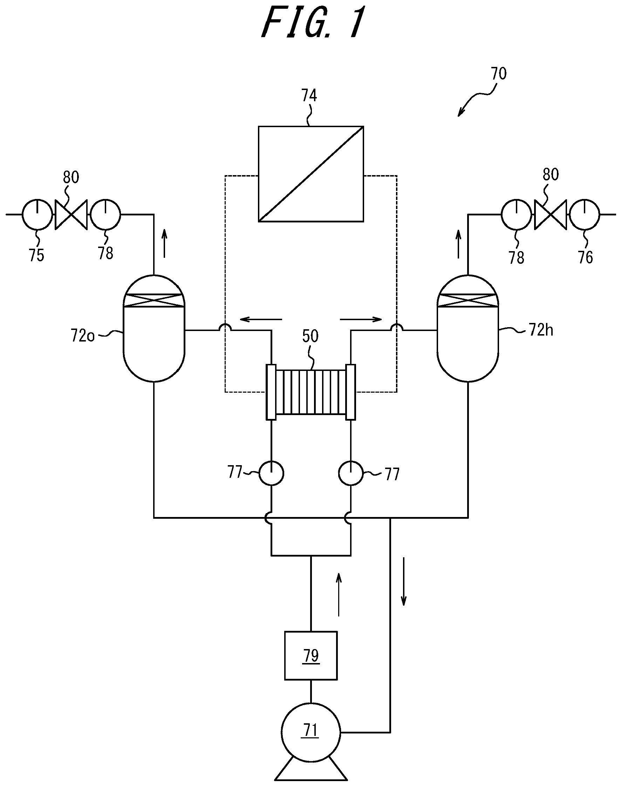

FIG. 1 schematically illustrates one example of an electrolysis apparatus of the present embodiment.

### (Electrolysis apparatus)

The electrolysis apparatus 70 includes, for example, a bipolar electrolyzer 50, a liquid feed pump 71 that circulates an electrolyte, a gas-liquid separation tank 72 that separates electrolyte from hydrogen and/or oxygen, and a water replenisher (not illustrated) that replenishes water consumed by electrolysis, as illustrated in FIG. 1. More specifically, the electrolysis apparatus 70 of the present embodiment includes an anode compartment 5a having an anode 2a and a cathode compartment 5c having a cathode 2c, which are partitioned from each other by a diaphragm 4.

The electrolysis apparatus of the present embodiment may be a water electrolysis apparatus for electrolyzing water or, in particular, an alkaline water electrolysis apparatus for electrolyzing alkaline water.

Among the components of the electrolysis apparatus 70, the bipolar electrolyzer 50 will be primarily described first.

The bipolar electrolyzer of the present embodiment may be a bipolar water electrolyzer for electrolyzing water, or, in particular, a bipolar alkaline water electrolyzer for electrolyzing alkaline water.

### (Electrolyzer)

Electrolyzers can be monopolar or bipolar, but a bipolar type electrolyzer 50, which is industrially preferred, is used as the electrolyzer in the electrolysis apparatus 70 of the present embodiment, as illustrated in FIG. 1, etc.

The bipolar type is one of the methods of connecting a large number of cells to a power supply, in which, a plurality of bipolar electrolysis elements 60 having an anode 2a as one surface thereof and a cathode 2c as one surface thereof are arranged in the same orientation and connected in series, and then only both ends thereof are connected to a power supply.

A bipolar electrolyzer 50 has a feature of enabling a small power supply current and can be used to produce a large quantity of compound, a specific substance, or the like through electrolysis in a short time. Since power supply equipment having fixed current and high voltage is less expensive and more compact when power supply equipment having the same power is compared, the bipolar type is more preferable than the monopolar type from an industrial viewpoint.

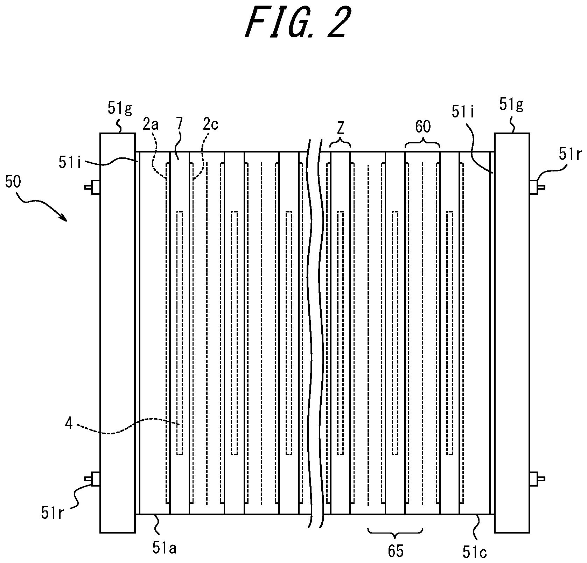

FIG. 2 illustrates an overall view of one example of the electrolyzer of the electrolysis apparatus of the present embodiment.

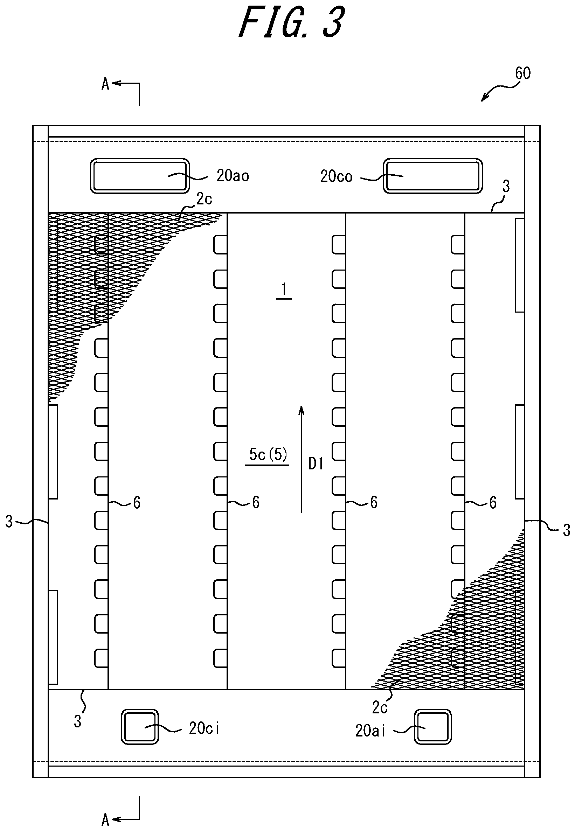

In addition, FIG. 3 illustrates one example of a bipolar electrolysis element in the electrolyzer of the present embodiment in plan view.

In one example illustrated in FIGS. 2 and 3, the bipolar electrolyzer 50 is a bipolar electrolyzer in which a plurality of bipolar electrolysis elements 60, each including an anode 2a, a cathode 2c, a partition wall 1 separating the anode 2a and the cathode 2c from each other and an outer frame 3 bordering the partition wall 1, are stacked with the diaphragm 4 interposed therebetween.

Note that the electrolysis element of the present embodiment includes a single element in which an anode compartment and a cathode compartment are formed via a diaphragm. Specifically, it may be an element in which an anode held by a partition wall and an outer frame and a cathode held by the partition wall and the outer frame are arranged having a diaphragm interposed therebetween and tightened by bolts, so that the anode compartment and the cathode compartment are included. A bipolar electrolyzer may be formed by staking such single elements.

In particular, in the bipolar electrolyzer 50 according to the present embodiment, a portion between the partition walls 1 of two adjacent bipolar electrolysis elements 60 and a portion between the partition walls 1 of each terminal element and of the adjacent bipolar electrolysis element 60 are respectively referred to as an electrolysis cell 65. Each electrolysis cell 65 includes a partition wall 1, an anode compartment 5a and an anode 2a of one element; a diaphragm 4; and a cathode 2c, a cathode compartment 5c, and a partition wall 1 of the other element.

### ((Bipolar electrolysis element))

One example of a bipolar electrolysis element 60 used in the bipolar electrolyzer 50 of the present embodiment includes a partition wall 1 separating an anode 2a and a cathode 2c from each other, and also includes an outer frame 3 bordering the partition wall 1. More specifically, the partition wall 1 is conductive and the outer frame 3 runs along the periphery of the partition wall 1 such as to border the partition wall 1.

The bipolar electrolysis element of the present embodiment is suitable as a bipolar water electrolysis element for electrolyzing water, and especially as a bipolar alkaline water electrolysis element for electrolyzing alkaline water.

Note that the partition wall 60 of the present embodiment may be used such that, typically, the given direction D1 along the partition wall 1 is a vertical direction. More specifically, when the shape of the partition wall 1 in a plan view is rectangular, it may be used such that the given direction D1 along the partition wall 1 is the same direction as one of two sets of sides opposed to each other (see FIG. 3). Herein the aforementioned vertical direction may also be referred to as the electrolyte passing direction.

As illustrated in FIG. 2, the bipolar electrolyzer 50 of the present embodiment is formed by stacking a required number of bipolar electrolysis elements 60.

In the example of the bipolar electrolyzer 50 illustrated in FIG. 2, a fast head 51g, an insulating plate 51i, and an anode terminal element 51a are arranged in order from one end, and in addition, an anode side gasket portion of a gasket 7, a diaphragm 4, a cathode side gasket portion of the gasket 7, and a bipolar electrolysis element 60 are arranged side by side in this order. In this case, each bipolar electrolysis element 60 is arranged such that the corresponding cathode 2c faces toward the anode terminal element 51a side. Components from anode-side gasket portions up to bipolar electrolysis elements 60 are repeatedly arranged as many times as required for the designed production quantity. After components from the anode-side gasket portion up to the bipolar electrolysis element 60 have been arranged repeatedly the required number of times, an anode-side gasket portion, a diaphragm 4, and a cathode-side gasket portion are arranged again, and finally a cathode terminal element 51c, an insulating plate 51i, and a loose head 51g are arranged in this order. All of these components of the bipolar electrolyzer 50 are tightened together with a tie rod 51r (see FIG. 2) or a tightening mechanism of a hydraulic cylinder and are unified, and thus the bipolar electrolyzer 50 is formed.

The arrangement of the bipolar electrolyzer 50 can be selected from either the anode 2a side or the cathode 2c side, and is not limited to the above order.

As illustrated in FIG. 2, in the bipolar electrolyzer 50, the bipolar electrolysis elements 60 are arranged between the anode terminal element 51a and the cathode terminal element 51c. The diaphragms 4 are arranged between the anode terminal element 51a and the bipolar electrolysis element 60, between bipolar electrolysis elements 60 adjacent to each other, and between the bipolar electrolysis element 60 and the cathode terminal element 51c, respectively.

Further, in the bipolar electrolyzer 50 in the present embodiment, the partition walls 1, the outer frames 3, and the diaphragm 4 define electrode compartments 5 through which the electrolyte passes.

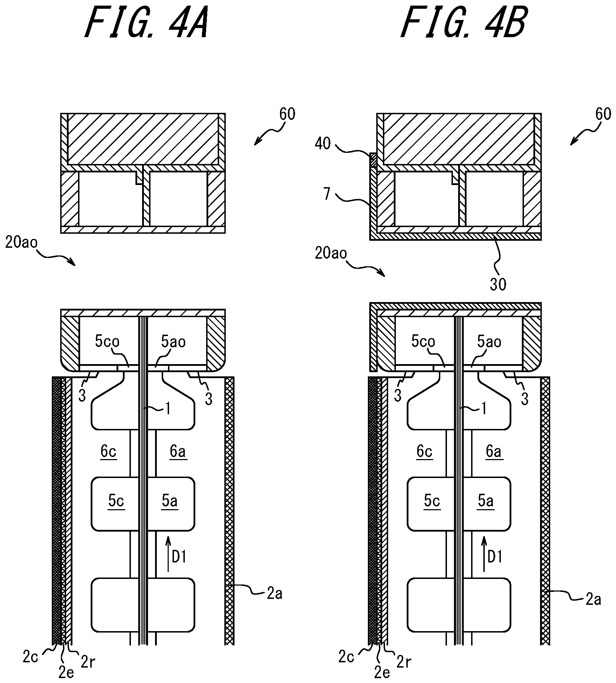

FIG. 4A illustrates a part of the cross section of the one example of the bipolar electrolysis element illustrated in FIG. 3 when cut by the plane along the line A-A.

In more detail, each electrode compartment 5 has an electrolyte inlet 5i for introducing electrolyte into the electrode compartment 5 and an electrolyte outlet 5o for drawing electrolyte out of the electrode compartment 5 at the boundary with the outer frame 3. More specifically, each anode compartment 5a includes an anode electrolyte inlet 5ai for introducing electrolyte into the anode compartment 5a and an anode electrolyte outlet 5ao for drawing electrolyte out of the anode compartment 5a. Similarly, the cathode compartment 5c is provided with a cathode electrolyte inlet 5ci for introducing the electrolyte into the cathode compartment 5c and a cathode electrolyte outlet 5co for discharging the electrolyte discharged from the cathode compartment 5c.

In the anode compartment 5a and the cathode compartment 5c according to the present embodiment, an internal distributor may be provided to distribute electrolyte uniformly to the electrode surface in the bipolar electrolyzer 50. The electrode compartment 5 may also include a baffle plate having the function of limiting liquid flow in the bipolar electrolyzer 50, and further include a protrusion for generating a Karman vortex in the anode compartment 5a and the cathode compartment 5c to obtain uniform concentration and temperature of the electrolyte in the bipolar electrolyzer 50 and facilitate degassing of gas attached to the electrode 2 and the diaphragm 4.

A manifold 20, which is pipes that distribute or collects gases and the electrolyte, is attached to the bipolar electrolyzer 50. Specifically, the manifold 20 includes and preferably consists of an inlet header portion 20i for introducing the electrolyte into the electrode compartment 5, and an outlet header portion 20o for discharging the gas and the electrolyte out of the electrode compartment 5.

Typically, there are two types of arrangement of the manifold: the internal manifold-type arrangement in which the assembly piping (hereinafter referred to as header) is not separated from the bipolar electrolyzer and is provided inside the electrolyzer; and the external manifold-type arrangement in which the header is separated from the bipolar electrolyzer (provided outside the electrolyzer). In the bipolar electrolyzer 50 of the present embodiment, the internal manifold type is used, in which both the inlet header portion 20i and the outlet header portion 20o are provided inside the bipolar electrolyzer 50.

In general, the anode distribution pipe is referred to as an anode inlet header portion 20ai, the cathode distribution pipe is referred to as a cathode inlet header portion 20ci, the anode collection pipe is referred to as an anode outlet header portion 20ao, and the cathode collection pipe is referred to as a cathode outlet header portion 20co.

FIG. 3 illustrates one example of an internal manifold-type bipolar electrolysis element of the present embodiment in plan view.

Furthermore, FIG. 4A illustrates a part of the cross section of the one example of the internal manifold-type bipolar electrolysis element illustrated in FIG. 3 when cut by the plane along the line A-A.

In the example illustrated in FIGS. 3 and 4A, the bipolar electrolysis element 60 is used such that the given direction D1 along the partition wall 1 is in the vertical direction. At the lower part of the outer frame 3 at the edge of the partition wall 1, an anode inlet header portion 20ai for supplying the electrolyte to the anode compartment 5a and a cathode inlet header portion 20ci for supplying the electrolyte to the cathode compartment 5c are provided. At the upper part of the outer frame 3 at the edge of the partition wall 1, an anode outlet header portion 20ao for discharging the electrolyte from the anode compartment 5a and a cathode outlet header portion 20co for discharging the electrolyte from the cathode compartment 5c are provided.

In the present embodiment, the inlet header portions 20i and the outlet header portions 20o are preferably provided so as to be separated from each other from the viewpoint of the efficiency of electrolysis, and are preferably provided so as to face each other across the central portion of the electrode compartment 5. When the shape of the partition wall 1 in plan view is a rectangular shape as illustrated in FIG. 3, they are preferably provided so as to be symmetrical relative to the center of the rectangle.

The inlet header portions 20i and the outlet header portions 20o are both preferably provided outside of the diaphragm 4 (at any location around the diaphragm 4). By arranging the manifold 20 outside of the diaphragm 4 (e.g., outside of the electrode compartment 5 as illustrated in FIG. 3) rather than inside the diaphragm 4 (e.g., by arranging the inlet header portions 20i and the outlet header portions 20o inside the diaphragm 4 so that they penetrate through the diaphragm 4), there is no risk of damages to the diaphragm 4.

Typically, as illustrated in FIG. 3, although the anode inlet header portion 20ai, the cathode inlet header portion 20ci, the anode outlet header portion 20ao, and the cathode outlet header portion 20co are provided one for each electrode compartment 5, the present embodiment is not limited thereto, and they may be provided more than one for each electrode compartment 5.

In the example illustrated in FIGS. 3 to 4A, the electrode compartment 5 has a cuboid shape as a result of the partition wall 1 of a rectangular shape in a plan view and the diaphragm 4 of a rectangular shape in a plan view being arranged in parallel to each other and as a result of an inner surface on the partition wall 1 side of the cuboid outer frame provided at the periphery of the partition wall 1 being perpendicular to the partition wall 1. However, in the present disclosure, the shape of the electrode compartment 5 is not limited to cuboid as illustrated. It may be changed appropriately depending on the shapes of the partition wall 1 and the diaphragm 4 in a plan view, an angle formed by the inner surface on the partition wall 1 side of the outer frame 3 and the partition wall 1, and may be any shape as far as the effects of the present disclosure can be obtained.

Although the direction along which the manifold 20 extends is not limited in the present embodiment, it is preferable that there is a header portion extending in the direction perpendicular to the partition wall 1, and it is more preferable that all of the header portions extend in the direction perpendicular to the partition wall 1, from the viewpoint of facilitating achievement of the effects of the present disclosure, as illustrated in one example in FIGS. 3 and 4A.

Note that extending in the direction perpendicular to the partition wall 1 in the present specification does not mean that "extending strictly in the direction perpendicular to the partition wall 1, and it includes the case where each extends in the direction inclined within a range of 45° or less when viewed from the direction along the partition wall 1, for example. Note that the inclination is preferably 30° or less, and more preferably 15° or less.

In the present embodiment, at least part of the surface of the manifold 20 is covered with a manifold covering member 30 integrated with the gasket 7 for the purpose of preventing the generation of impurity gases caused by the leakage current.

Here, the integration of the manifold covering member 30 and the gasket 7 means that the sealing function of the gasket 7 and the function of the manifold covering member 30 covering the surface of the manifold 20 are provided by a single component.

In addition, the covering of the manifold covering member 30 refers to covering at least a part of the surface (liquid-contacting surface) of the manifold 20 with the member. Covering at least part of the surface of the manifold 20 with the manifold covering member 30 prevents the generation of impurity gases caused by the leakage current on the surface of the manifold 20. The manifold covering member 30 is preferably formed of at least an insulating material.

In addition, to further improve sealing between each element, a resin spacer 40 may be disposed outside the gasket 7 so as to surround the outer circumference of the gasket 7.

FIG. 4B illustrates the state in which the manifold covering member 30 integrated with the gasket 7 is attached to the one example of the bipolar electrolysis element 60 illustrated in FIG. 4A. Although not illustrated in the figure, a thin tube extending from the anode outlet header portion 20ao to the anode compartment 5a is provided in reality, so that the opening of the thin tube on the surface of the anode outlet header portion 20ao is not covered with the manifold covering member 30.

Note that, in the bipolar electrolyzer 50 of the electrolysis apparatus 70 of the present embodiment, in order to decrease convection in the electrolysis compartment 5 caused by disturbance of gas and liquid in the electrolysis compartment 5 to suppress a local increase in the electrolyte temperature, a plurality of baffling plates 6 (an anode baffling plate 6a, a cathode baffling plate 6c) may be arranged in parallel with the given direction D1 along the partition wall 1 (see FIGS. 3 and 4).

The number, the length, the angle with the partition wall 1, and the constant spacing (pitch) in a direction perpendicular to a given direction D1 along the partition wall 1, of baffling plates 6, may be determined as appropriate and may not be constant as long as the effect of the present disclosure is obtained. In addition, the baffling plate 6 may have through holes, and the number of through holes and the constant spacing (pitch) for a given direction D1 along the partition wall 1 may be determined as appropriate and may not be constant as long as the effect of the present disclosure is obtained.

Instead of the rectification plates 6, protrusions and/or recesses may be provided. The three-dimensional shapes of the protrusions and/or recesses are not limited and can be any geometric shape, such as corrugated, hemispherical, spherical, ellipsoidal, columnar, pyramidal, or pyramidal. The protrusions and/or recesses may be placed at certain spacing. The arrangement of the protrusions and/or recesses may be any arrangement, such as 60° polka dots, 45° polka dots, or parallel.

Although this is not particularly limitative, the bipolar electrolyzer 50 of the electrolysis apparatus 70 of the present embodiment preferably has 50 to 500 bipolar electrolysis elements 60, more preferably has 70 to 300 bipolar electrolysis elements 60, and particularly preferably has 100 to 200 bipolar electrolysis elements 60.

As the number (logarithm) of the bipolar electrolysis elements 60 increases, the effect on gas purity caused by the leakage current is mitigated. On the other hand, an increase in log makes it difficult to distribute the electrolyte to each electrolysis cell 65 uniformly. In the case of less than the lower limit or more than the upper limit, it will be difficult to obtain both the effect of enabling a stabilized electrical control system by decreasing self-discharge caused when the power supply is stopped and the effect of enabling the realization of power storage with high efficiency, more specifically, a decrease in pump power and a reduction in leak current.

When the log is increased excessively, it may cause the production of the bipolar electrolyzer 50 to be difficult, and when a lot of bipolar electrolysis elements 60 with poor production accuracy are stacked, the sealing surface pressure can easily be inhomogeneous, which will cause electrolyte or gas leakage.

The following provides a description of details of the components of the bipolar electrolyzer 50 of the electrolysis apparatus 70 of the present embodiment.

In addition, in the following, preferred embodiments for enhancing the effect of the present disclosure are also described in detail.

### - Partition wall -

The shape of each partition wall 1 may have a plate-like shape having a predetermined thickness, yet is not particularly limited.

The shape of the partition wall 1 in a plan view is not particularly limited, and it may be a rectangular shape (such as a square or a rectangle) or a circular shape (such as a circle or an ellipse), where a rectangular shape may have a rounded corner.

In one embodiment, a partition wall 1 and an outer frame 3 may be joined by welding or any other method to obtain a unified structure. For example, a partition wall 1 may be provided with flange portions that protrude in the direction perpendicular to a plane of the partition wall 1 (anode flange portion protruding on the anode 2a side and cathode flange portion protruding on the cathode 2c side), and these flange portions may constitute part of an outer frame.

Note that the partition wall 1 may be used such that, typically, the given direction D1 along the partition wall 1 is a vertical direction. More specifically, as illustrated in FIG. 3, when the shape of the partition wall 1 in a plan view is rectangular, it may be used such that the given direction D1 along the partition wall 1 is the same direction as one of two sets of sides opposed to each other.

From the viewpoint of achieving a uniform supply of electric power, each partition wall is preferably made of a material having conductivity, and from the viewpoint of alkali resistance and heat resistance, preferred materials include nickel, nickel alloy, mild steel, and nickel alloy plated with nickel.

### - Electrode -

In hydrogen production by electrolysis, reduction of energy consumption, specifically, reduction of electrolytic voltage presents a significant challenge. Since the electrolytic voltage greatly depends on the electrodes 2, the performance of the both electrodes 2 is important.

In addition to the voltage required for the electrolysis of water that is theoretically determined, the electrolytic voltage for electrolysis also includes an overvoltage of an anode reaction (generating oxygen), an overvoltage of a cathode reaction (generating hydrogen), and a voltage dependent on the distance between electrodes 2, i.e., between the anode 2a and the cathode 2c. As used herein, the term "overvoltage" refers to a voltage that needs to be applied excessively beyond the theoretical decomposition potential to cause a certain current flow, and its value depends on the current value. When the same current flows, the use of electrodes 2 with low overvoltage will decrease power consumption.

To provide low overvoltage properties, the requirements for the electrode 2 include high conductivity, high oxygen generation ability or (hydrogen generation ability), and high wettability of the electrolyte on the surface of the electrode 2.

It is also noted here that the electrode 2 for electrolysis having low overvoltage properties is less susceptible, even in the case of using an unstable current source such as renewable energy, to corrosion of the substrate and the catalyst layer of the electrode 2, detachment of the catalyst layer, dissolution into the electrolyte, and adhesion of inclusions to the diaphragm 4.

The electrode 2 is preferably a porous body from the perspective of using a larger surface area for electrolysis and removing the gas generated by electrolysis efficiently from the surface of the electrode 2. In particular, in the case of an electrolyzer having a zero-gap structure Z in which the diaphragm 4 is in contact with the anode 2a and the cathode 2c, the surface of the electrode 2 opposite to the surface in contact with the diaphragm 4 is preferably penetrated because the gas generated from the back side of the surface of the electrode 2 that is in contact with the diaphragm 4 needs to be removed.

Examples of the porous body include plain weave mesh, punching metal, expanded metal, metal foam, and the like.

A substrate may be used as the electrode 2, or alternatively, an electrode having a catalyst layer with high reaction activity on the surface of a substrate may be used. However, it is preferable to use an electrode having a catalyst layer with high reaction activity on the surface of a substrate.

Although the material of the substrate is not particularly limited, mild steel, stainless steel, nickel, and nickel-based alloys are preferable in terms of resistance to the operating environment.

The catalyst layer of the anode 2a preferably has high oxygen producing ability. Nickel, cobalt, iron, a platinum group element, or the like may be used for the catalyst layer of the anode. In order to achieve the desired activity and durability, the catalyst layer may be formed by using any of these examples in the form of a simple substance of metal, a compound such as an oxide, a complex oxide, or an alloy of a plurality of metal elements, or a mixture thereof. Organic substances such as polymers may be contained in order to improve durability and adhesion to the substrate.

The catalyst layer of the cathode 2c preferably has high hydrogen generating ability, and it is possible to use, for example, nickel, cobalt, iron, or a platinum group element. In order to achieve the desired activity and durability, the catalyst layer may be formed by using any of these examples in the form of a simple substance of metal, a compound such as an oxide, a complex oxide, or an alloy of a plurality of metal elements, or a mixture thereof. Organic substances such as polymers may be contained in order to improve durability and adhesion to the substrate.

Examples of methods by which the catalyst layer may be formed on the substrate include a thermal spraying method such as plating or plasma spraying; a thermal decomposition method including applying a precursor layer solution onto the substrate and subsequently performing heating thereof; a method including mixing a catalyst substance with a binder component and immobilizing it on a substrate; and a vacuum film-forming method such as sputtering.

### - Outer frame -

Although the shape of each outer frame 3 is not particularly limited as long as it can border the corresponding partition wall 1, the outer frame 3 may have a shape including an inner surface extending along an extension of the partition wall 1 in a direction perpendicular to the plane of the partition wall 1.

The shape of the outer frame 3 is not particularly limited, and may be appropriately determined depending on the shape of the partition wall 1 in a plan view.

The material of the outer frame 3 is preferably a material having conductivity. From perspectives of alkali resistance and heat resistance, nickel, nickel alloy, mild steel, and nickel alloy plated with nickel are preferable.

### - Diaphragm -

As the diaphragm used in each bipolar electrolyzer 50 of the electrolysis apparatus 70, an ion permeable diaphragm 4 is used in order to isolate the generated hydrogen gas and oxygen gas while conducting ions. This ion permeable diaphragm 4 may be an ion exchange membrane having ion exchange ability or a porous membrane through which the electrolyte can permeate. The ion permeable diaphragm 4 preferably has low gas permeability, high ion conductivity, low electron conductivity, and high strength.

### -- Porous membrane --

The porous membrane has a plurality of fine through-holes, and has a structure that permits the electrolyte to pass through the diaphragm 4. Control of the porous structure such as pore size, porosity, and hydrophilicity is very important since the electrolyte permeates into the porous membrane to develop ion conduction. On the other hand, the porous membrane is required to prevent not only the electrolyte but also the generated gas from passing therethrough, that is, to have gas barrier properties. From this viewpoint control of the porous structure is also important.

The porous membrane has a plurality of fine through-holes, and may be, for example, a polymeric porous membrane, an inorganic porous membrane, a woven fabric, or a nonwoven fabric. These may be prepared with known techniques.

Examples of methods by which a polymeric porous membrane may be produced include a phase inversion method (microphase separation method), an extraction method, a stretching method, and a wet gel stretching method.

The porous membrane preferably contains a polymer material and hydrophilic inorganic particles. The presence of hydrophilic inorganic particles allows for imparting hydrophilicity to the porous membrane.

While the thickness of the porous membrane is not particularly limited, it is preferably 200 µm or more and 700 µm or less. When the thickness of the porous membrane is 200 µm or more, a more excellent gas barrier property is obtained and the strength of the porous membrane against impact is further improved. From this viewpoint, the lower limit of the thickness of the porous membrane is more preferably 300 µm or more, even more preferably 350 µm or more, and still even more preferably 400 µm or more. On the other hand, when the thickness of the porous membrane is 700 µm or less, the permeability of ions is less likely to be inhibited due to the resistance of the electrolyte contained in the pores during operation, and a further excellent ion permeability can be maintained. From such viewpoints, the upper limit of the thickness of the porous membrane is more preferably 600 µm or less, even more preferably 550 µm or less, and still more even preferably 500 µm or less. Particularly, when the polymer material includes at least one selected from the group consisting of polysulfone, polyethersulfone, and polyphenylsulfone, such an effect is further improved.

### -- Ion exchange membrane --

Examples of ion exchange membranes that may be used include cation exchange membranes that allow selective permeation of cations and anion exchange membranes that allow selective permeation of anions. Either type of ion exchange membrane may be used.

Known materials may be used as the material of the ion exchange membrane without any particular limitations. For example, a fluorine-containing resin or a modified resin of a polystyrene-divinylbenzene copolymer can suitably be used. In particular, a fluorine-containing ion exchange membrane is preferable due to excelling in terms of heat resistance, chemical resistance, and the like.

The fluorine-containing ion exchange membrane may, for example, be an ion exchange membrane that has a function of allowing selective permeation of ions produced during electrolysis and that contains a fluorine-containing polymer including ion exchange groups. Note that the fluorine-containing polymer including ion exchange groups is referred to herein is a fluorine-containing polymer that includes ion exchange groups or ion exchange group precursors that can become ion exchange groups upon hydrolysis. For example, the fluorine-containing polymer may be a polymer that includes a hydrofluorocarbon main chain, that includes functional groups that are convertible to ion exchange groups through hydrolysis or the like as pendant side chains, and that can be melt processed.

Examples of the ion exchange group included in the ion exchange membrane include a cation exchange group such as a sulfonic acid group, a carboxylic acid group, and a phosphoric acid group, and an anion exchange group such as a quaternary ammonium group.

The ion exchange membrane can be imparted with excellent ion exchange ability and hydrophilicity by adjusting the equivalent mass EW of the ion exchange group. In addition, it is possible to control to give a large number of smaller clusters (minute portions to which ion exchange groups coordinate and/or adsorb water molecules), and the alkali resistance and the ion selective permeability tend to improve.

This equivalent mass EW can be measured by salt replacement of the ion exchange membrane and back titration of the resultant solution with an alkaline or acid solution. The equivalent weight EW can be adjusted by a copolymerization ratio of a monomer as raw materials, selection of monomer species, or the like.

The equivalent mass EW of the ion exchange membrane is preferably 300 or more from the viewpoint of the hydrophilicity and the water resistance of the membrane, and is preferably 1300 or less from the viewpoint of the hydrophilicity and the ion exchange ability.

The thickness of the ion exchange membrane is not particularly limited, but is preferably in the range of 5 to 500 µm from the viewpoint of the ion permeability and strength.

A surface treatment may be performed for the purpose of improving the hydrophilicity of the surface of the ion exchange membrane. Specific examples thereof include a method of coating hydrophilic inorganic particles such as zirconium oxide, and a method of imparting minute irregularities to the surface and the like.

The ion exchange membrane is preferably used together with a reinforcing material from the viewpoint of the strength of the membrane. The reinforcing material is not particularly limited, and examples thereof include a generally-used nonwoven fabric and woven fabric, and a porous membrane made of various materials. The porous membrane is not particularly limited, but a polytetrafluoroethylene (PTFE)-based film which is stretched and made to be porous is preferable.

### ((Zero-gap structure))

In the bipolar electrolysis element 60 of each zero-gap cell in which the diaphragm 4 is in contact with the anode 2a and the cathode 2c, it is preferable to adopt a configuration in which a spring that is an elastic body is disposed between an electrode 2 and the corresponding partition wall 1 and in which the electrode 2 is supported by the spring as a means of reducing inter-electrode distance. For example, in a first example, a spring made of a conductive material may be attached to the partition wall 1, and the electrode 2 may be attached to the spring. In a second example, a spring may be attached to electrode ribs 6 which are attached to the partition wall 1, and the electrode 2 may be attached to the spring. In the case of adopting such a configuration using an elastic body, it is necessary to appropriately adjust the strength of the spring, the number of springs, the shape, and the like, as necessary, so as not to introduce non-uniformity in the pressure of the electrode 2 against the diaphragm 4.

Further, by strengthening the rigidity of the other electrode 2 paired with the electrode 2 supported through the elastic body, the other electrode 2 is structured to have little deformation even when pressed. On the other hand, by providing the electrode 2 supported through the elastic body with a flexible structure capable of deforming when pressed against the diaphragm 4, irregularities due to tolerance of fabrication accuracy of the electrolysis cell 65, deformation of the electrode 2, and the like can be absorbed, and a zero-gap structure can be maintained.

In the bipolar electrolyzer 50 of the electrolysis system 70 of the present embodiment, a conductive elastic body 2e and a current collector 2r are provided between the cathode 2c or the anode 2a and the partition wall 1 such that the conductive elastic body 2e is interposed between the cathode 2c or the anode 2a and the current collector 2r.

### - Current collector -

The current collector 2r transmits electricity to the conductive elastic body 2e and/or the electrode 2 stacked thereon, supports the loads received from them, and has the role of allowing gas produced from the electrode 2 to pass to the side of the partition wall 1 unhindered. Accordingly, the current collector 2r is preferably in the form of an expanded metal, a punched porous plate, or the like. In this case, the open fraction of the current collector 2r is preferably within a range allowing hydrogen gas generated from the electrode 2 to escape to the side of the partition wall 1 unhindered. However, if the open fraction is too high, problems such as reduced strength of the current collector 2r and lower conductivity to the conductive elastic body 2e may arise, and if the open fraction is too low, this may adversely affect gas escape.

Nickel, nickel alloy, stainless steel, mild steel, and the like can be used as the material of the current collector 2r from perspectives of conductivity and alkali resistance, yet from the viewpoint of corrosion resistance, nickel and mild steel, stainless steel, and nickel alloy plated with nickel are preferred.

### - Conductive elastic body -

The conductive elastic body 2e is provided between a current collector 2r and an electrode 2 and is in contact with the current collector 2r and the electrode 2. The essential requirements thereof are that the conductive elastic body 2e transmits electricity to the electrode 2 and does not hinder diffusion of gas produced from the electrode 2. This is because if diffusion of gas is hindered, electric resistance increases and the area of the electrode 2 used for electrolysis decreases, resulting in lower electrolysis efficiency. The most important role of the conductive elastic body 2e is to bring the diaphragm 4 and the electrode 2 into close contact with each other by evenly applying an appropriate pressure to the electrode 2 so as not to damage the diaphragm 4.

Typical known conductive elastic bodies may be used as the conductive elastic body 2e. For example, a cushion mat obtained through corrugation of woven nickel wires having a wire diameter of approximately 0.05 to 0.5 mm is preferable because it is easy to maintain a zero-gap structure therewith.

### - Electrode compartment -

In the bipolar electrolyzer 50, a partition wall 1, an outer frame 3, and a diaphragm 4 define an electrode compartment 5 through which an electrolyte passes.

In the bipolar electrolyzer 50 of the present embodiment where the arrangement of the manifold is of the internal manifold type, the space occupied by the anode 2a and the cathode 2c per se may also be considered to be the space inside the electrode compartments 5.

### - Baffling plate -

In the bipolar electrolyzer 50 of the electrolysis apparatus 70, it is preferable that baffling plates 6 (an anode baffling plate 6a, a cathode baffling plate 6c) are attached to the partition wall 1, and the baffling plates 6 are physically connected to the electrodes 2. With this structure, the baffling plates 6 serve as supports for the electrodes 2, making it easier to maintain the zero-gap structure Z.

For each of the baffling plates 6, an electrode 2 may be disposed thereon, or a current collector 2r, a conductive elastic body 2e, and an electrode 2 may be disposed thereon in this order.

In the one example of the bipolar electrolysis element 60 illustrated in FIG. 4A, a structure in which the baffling plate 6c, the current collector 2r, the conductive elastic body 2e, and the electrode 2c are stacked in this order is adopted in the cathode compartment 5c, whereas a structure in which the baffling plate 6a and the electrode 2a are stacked in this order is adopted in the anode compartment 5a. The present disclosure is not limited to the structure mentioned above, and the structure of "the baffling plate 6a, the current collector 2r, the conductive elastic body 2e, and the electrode 2a" may also be employed in the anode compartment 5a.

The baffling plates 6 (anode baffling plates 6a, cathode baffling plates 6c) preferably have a role of transmitting current from the partition wall 1 to the anode 2a or cathode 2c in addition to a role of supporting the anode 2a or cathode 2c.

Furthermore, it is preferable that at least a part of the baffling plate 6 is conductive, and it is more preferable that the entire baffling plate 6 is conductive. This configuration can inhibit a rise in cell voltage due to electrode deflection.

A conductive metal is typically used as the material of baffling plates 6. For example, nickel-plated mild steel, stainless steel, nickel, or the like may be used.

The spacing between adjacent anode baffling plates 6a or adjacent cathode baffling plates 6c is determined by taking into account the electrolysis pressure and the pressure difference between the anode compartment 5a and cathode compartment 5c.

### - Manifold -

The bipolar electrolyzer 50 has a cathode compartment 5c and an anode compartment 5a for each electrolysis cell 65. In order to conduct an electrolysis reaction continuously in the bipolar electrolyzer 50, it is necessary to continuously supply an electrolyte that contains a sufficient amount of material to be consumed by electrolysis into the cathode compartment 5c and the anode compartment 5a of each electrolysis cell 65.

The electrolysis cell 65 is connected to an electrolyte supply/discharge plumbing system, referred to as a manifold 20, shared by a plurality of electrolysis cells 65. The manifold 20 preferably has an inlet header portion 20i and an outlet header portion 20o, and preferably consists of an anode inlet header portion 20ai, a cathode inlet header portion 20ci, an anode outlet header portion 20ao, and a cathode outlet header portion 20co.

Although the material of the manifold 20 is not particularly limited, it is necessary to adopt a material that can sufficiently withstand the corrosive properties of the electrolyte that is to be used, operating conditions such as pressure and temperature, and the like. Examples of the material of the manifold 20 include, for example, metals such as iron, nickel, cobalt, and the like.

Typical arrangements of the manifold 20 of the bipolar electrolyzer 50 include the internal manifold type and external manifold type, and the internal manifold type is used in the present embodiment.

### -- Internal manifold type --

The internal manifold type refers to a type of arrangement in which the electrolyzer and the manifold are not separated and the manifold is disposed inside the bipolar electrolyzer.

In the internal manifold type, since there is no need to use nozzles as in the external manifold type, the problem of interference of nozzles does not occur. This allows for avoiding the enlargement of the electrolysis cell to avoid interference, thus enabling the electrolysis cell to be made thinner. Furthermore, it is more pressure-resistant than the external manifold type, making it suitable for pressurized operation.

In the internal manifold-type bipolar electrolyzer 50 of the present embodiment, specifically, the anode inlet header portion 20ai and the cathode inlet header portion 20ci are provided inside and/or outside of the electrode compartment 5 (partition wall 1), and the anode outlet header portion 20ao and the cathode outlet header portion 20co are provided inside and/or outside of the electrode compartment 5 (partition wall 1). Among these arrangements, it is preferable to dispose all header portions outside the diaphragm 4 (for example, outside the electrode compartment 5 as illustrated in FIG. 3) to avoid the risk of damaging the diaphragm 4, rather than disposing them inside the diaphragm 4 (for example, disposing the inlet header portions 20i and the outlet header portions 20o so as to penetrate through the diaphragm 4).

In addition, although the direction in which each header portion extends is not limited, from the viewpoint of facilitating the achievement of the effect of the present disclosure, it is preferable that the anode inlet header portion 20ai, the cathode inlet header portion 20ci, the anode outlet header portion 20ao, and the cathode outlet header portion 20co extend in a direction perpendicular to the partition wall 1, and it is more preferable that they all extend in a direction perpendicular to the partition wall 1, as illustrated in one example in FIGS. 3 and 4A.

The shape of the cross section of the flow path of the header portions is not limited, and may be round, rectangular, oval, or the like.

The cross-sectional area of the flow path in the header portions can be designed freely, taking into account the pressure loss in the flow path and blockage of the flow path.

When elements are stacked, a gasket 7 is placed around each header portion to improve sealing between the elements.

Further, in the internal manifold-type bipolar electrolyzer 50, each element is structurally highly susceptible to leakage current. In the present embodiment, at least part of the surface (liquid-contacting surface) of the manifold 20 is protected by a manifold covering member 30 integrated with the gasket 7 for the purpose of preventing the generation of impurity gases caused by the leakage current. When the protection of the surface of the manifold 20 is applied to both the inlet header portions 20i and the outlet header portions 20o, the effect thereof can be enhanced.

Note that the internal manifold-type bipolar electrolyzer 50 may include a gas-liquid separation box for separating the electrolyte and gas produced by electrolysis on the inside thereof. The installation position of the gas-liquid separation box is not particularly limited, and the gas-liquid separation box may be installed between the anode compartment 5a and the anode outlet header portion 20ao, or between the cathode compartment 5c and the cathode outlet header portion 20co.

The surface of the gas-liquid separation box may be coated with a coating material that can sufficiently withstand the corrosive properties of the electrolyte and operating conditions such as pressure and temperature. An electrically insulating material may be adopted as the coating material with the objective of increasing the electric resistance of a leakage current circuit inside the electrolyzer. Examples of materials of the coating material include ethylene-propylene-diene rubber (EPDM), PTFE, ETFE, PFA, polyvinyl chloride, polyethylene, and the like.

### - Gasket -

In the bipolar electrolyzer 50, between the outer frames 3 bordering the partition walls 1, a gasket 7 is sandwiched with the diaphragm 4.

The gasket 7 is used for providing a seal against the electrolyte and generated gas between each element and the diaphragm 4 and between respective elements, and to prevent leakage of the electrolyte and generated gas to the outside of the bipolar electrolyzer 50 and mixing of gases between the both electrode compartments.

The gasket 7 is generally configured with a quadrangular or annular shape obtained by hollowing out the electrode surface in conformity with the surface of the element contacting the frame body. A diaphragm 4 can be stacked between elements by sandwiching the diaphragm 4 with two such gaskets 7. Furthermore, it is also preferable that the gasket 7 comprises a slit portion capable of accommodating the diaphragm 4 so as to be able to hold the diaphragm 4, and the gasket 7 is provided with an opening that allows the accommodated diaphragm 4 to be exposed on both surfaces of the gasket 7. In this manner, the gasket 7 can accommodate the edge part of the diaphragm 4 in the slit part and cover the end face of the edge part of the diaphragm 4. This configuration can more reliably prevent leakage of the electrolyte or gas from the end face of the diaphragm 4.

The material of the gasket 7 is not particularly limited, and a known rubber material, resin material, or the like having insulation properties may be selected.

Specific examples of such rubber and resin materials include rubber materials such as natural rubber (NR), styrene butadiene rubber (SBR), chloroprene rubber (CR), butadiene rubber (BR), acrylonitrile-butadiene rubber (NBR), silicone rubber (SR), ethylene-propylene rubber (EPT), ethylene-propylene-diene rubber (EPDM), fluoro rubber (FR), isobutylene-isoprene rubber (IIR), urethane rubber (UR), and chlorosulfonated polyethylene rubber (CSM); fluororesin materials such as PTFE, PFA, ETFE, and chlorotrifluoroethylene-ethylene copolymer (ECTFE); and resin materials such as polyphenylene sulfide (PPS), polyethylene, polyimide, and polyacetal. Among these, EPDM and FR are particularly preferred from the viewpoint of elastic modulus and alkali resistance. One of these materials may be used individually, or two or more of these materials may be used together.

A reinforcing material may be embedded in the gasket 7. This can inhibit squashing of the gasket 7 upon pressing when sandwiched between frames during stacking and makes it easier to prevent damage to the gasket 7.

A known metal material or an oxide thereof, resin material, carbon material, or the like can be used as such a reinforcing material. Specific examples include metals such as nickel and stainless steel, metal oxides such as alumina and zirconium oxide, resins such as nylon, polypropylene, PVDF, PTFE, and PPS, and carbon materials such as carbon particles and carbon fibers.

The size of the gasket 7 is not particularly limited, and may be designed according to the dimensions of the electrode compartment 5 and the diaphragm 4 and may be set to a width of 10 to 40 mm.

Furthermore, when the gasket 7 is provided with the slit portion, the size of the slit portion may be such that the inner dimension of the slit is larger in length and width than the size of the diaphragm by 0.5 to 5 mm.

The thickness of the gasket 7 is not particularly limited and may be designed in accordance with the material and elastic modulus of the gasket 7 and the cell area, and 1.0 to 10 mm is preferred and 3.0 to 10 mm is more preferred.

When the gasket 7 is provided with the slit portion, the width of the opening in the slit portion may be 0.5 to 1.0 times the thickness of the diaphragm 4.

The elastic modulus of the gasket 7 is not particularly limited and may be designed in accordance with the materials of the electrodes 2 and the cell area. The elastic modulus is preferably within a range of 0.20 to 20 MPa in terms of tensile stress during 100% deformation, and is more preferably within a range of 1.0 to 10 MPa from viewpoints of sealing properties and cell strength in stacking.

Note that the tensile stress can be measured in accordance with JIS K6251. For example, an Autograph AG manufactured by Shimadzu Corporation may be used.

In particular, it is preferable that the thickness of the gasket 7 is 3.0 to 10 mm and the tensile stress at 100% deformation is 1.0 to 10 MPa from the viewpoint of suppressing an increase in the cell voltage due to deflections of the electrodes, and from the viewpoint of the sealing property and the cell strength upon being stacked.

In the electrolysis apparatus 70, the surface of the gasket 7 is preferably covered with an insulative resin sheet (for example, a fluororesin such as polytetrafluoroethylene). With this configuration, because the elements are insulated from each other, it is possible to prevent charges accumulated in each element 60 in the electric conduction step (the step in which the electrolyte is electrolyzed) from affecting the other elements in the stopped step (the step in which electrolysis of the electrolyte is stopped).

A plurality of gaskets may be arranged to each element depending on the target to be sealed. For example, separate gaskets 7 may be arranged, including an electrode compartment gasket that seals an electrode compartment 5 and a manifold gasket that seals the manifold 20.

It is sufficient that the manifold covering member is integrated with any of the gaskets. All manifold covering members may be integrated with the same gasket, or each manifold covering member may be integrated with a different gasket. From the viewpoint of ease of maintenance, fewer gaskets are preferred.

Furthermore, a resin spacer 40 may be disposed outside of the gasket 7 so as to surround the outer circumference of the gasket 7. The use of resin spacer 40 prevents damage to the diaphragm due to creep or protrusion of the gasket 7.

FIG. 4B illustrates one example of the state where a gasket 7 and a resin spacer 40 are attached to the bipolar electrolysis element 60.

The materials of the electrode compartment gasket, the manifold gasket, and the resin spacer 40 can be selected as appropriate depending on the target to be sealed.

The resin spacer 40 preferably has a compressive elastic modulus that is greater than that of the gasket 7. When the compressive elastic modulus of the resin spacer 40 is greater than the compressive elastic modulus of the gasket 7, even if creep occurs in the gasket 7 during long-term electrolysis, the distance between the elements is likely to be maintained constant and the sealing surface pressures of the gasket 7 and the resin spacer 40 are likely to be balanced.

Note that the compressive elastic modulus can be measured in accordance with the JIS K6254 standard. For example, an Autograph manufactured by Shimadzu Corporation may be used.

### - Manifold covering member -

In the bipolar electrolyzer 50 of the present embodiment, at least part of the surface (liquid-contacting surface) of the manifold 20 is covered with and protected by a manifold covering member 30 integrated with the gasket 7 for the purpose of preventing the generation of impurity gases caused by the leakage current.

In this specification, at least a part of the surface of the manifold being covered means that at least a part of the surface of the manifold, excluding the openings for the thin tubes extending to the electrode compartments, is covered.

Since the manifold covering member 30 is integrated with the gasket 7, gaps are less likely to be formed with the gasket 7, with the manifold 20, etc., than when they are independent of each other, and thus deterioration of the gas purities (generation of impurity gases caused by the leakage current) is less likely to occur. In addition, when integrated with the gasket 7, the number of components is reduced compared to when they are independent of each other, thereby making assembly and maintenance easier and reducing work time (electrolysis shutdown period).

Furthermore, the manifold covering member 30 is preferably detachable from the manifold 20. In other words, the manifold covering member 30 is preferably detachable together with the gasket 7 while being integrated when the gasket 7 is detached from the bipolar electrolyzer 50. The detachability allows only the manifold covering member 30 to be easily replaced during maintenance. On the other hand, if the manifold 20 has a resin lining that is not detachable, for example, the entire cell needs to be replaced when interfacial delamination or other defects occur, resulting in a large maintenance burden. Since replacement of a cell generally causes a shutdown period of the electrolysis facility, improved maintainability can solve the problem of a low operating rate of the electrolyzer.

In the manifold 20 of the present embodiment, at least part of the surface of any of the anode inlet header portion 20ai, the cathode inlet header portion 20ci, the anode outlet header portion 20ao, and the cathode outlet header portion 20co is preferably covered with the manifold covering member 30. However, from the viewpoint of more efficiently preventing the generation of impurity gases caused by the leakage current, it is preferable that at least part of the surfaces of the anode inlet header portion 20ai and the anode outlet header portion 20ao are covered with the manifold covering members 30, and it is more preferable that at least part of the surfaces of all of the header portions are covered with the manifold covering member 30.

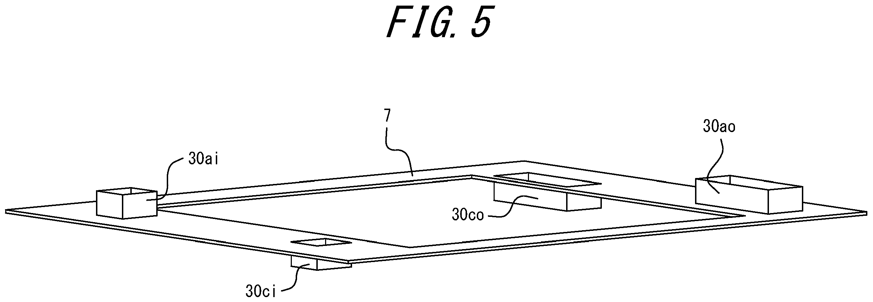

FIG. 5 illustrates one example of a manifold covering member 30 integrated with the gasket 7 of the present embodiment. FIG. 5 illustrates an example where one anode inlet manifold covering member 30ai that covers the anode inlet header portion 20ai of the manifold, one anode outlet manifold covering member 30ao that covers the anode outlet header portion 20ao, one cathode inlet manifold covering member 30ci that covers the cathode inlet header portion 20ci of the manifold, and one cathode outlet manifold covering member 30co that covers the cathode outlet header portion 20co are integrated into the gasket 7. In the manifold covering member 30, the portions corresponding to the openings for the thin tubes extending to the electrode compartments on the surface of the manifold 20 are similarly open, but are omitted in FIG. 5.

It is sufficient that the manifold covering member 30 integrated with the gasket 7 is attached to each element and covers at least part of the surface of the manifold 20 (header portion) of that element. In other words, the bipolar electrolyzer 50 of the present embodiment is composed of at least one element selected from the group consisting of an element in which the entire surface of the manifold 20 is covered with the manifold covering member 30, an element in which a part of the surface of the manifold 20 is covered with the manifold covering member 30 and the rest of the surface of the manifold 20 (e.g., metal surface) is exposed, and an element in which the surface of the manifold 20 is not covered at all by the manifold covering member 30 and the entire surface (e.g., metal surface) of the manifold 20 is exposed.

The greater the number of manifold covering members 30 used, the better the suppression effect of impurity gas generation caused by the leakage current tends to be.

In the bipolar electrolyzer 50 of the present embodiment, from the viewpoint of efficiently preventing the generation of impurity gases caused by the leakage current, when the total surface area of all manifolds 20 provided in the bipolar electrolyzer 50 is taken as 100%, the ratio (surface coverage ratio) of the surface area covered by the manifold covering members 30 is preferably 13 to 100%, more preferably 25 to 100%, and even more preferably 50 to 100%.

In particular, the ratio (surface coverage ratio) of the surface area covered by the manifold covering member 30 to the surface area of the manifold 20 provided on each terminal element (cathode terminal element 51c or anode terminal element 51a) is preferably 13 to 100%, more preferably 25 to 100%, and even more preferably 50 to 100%, from the viewpoint of the suppression effect of generation of impurity gases caused by the leakage current and maintainability.

In addition, the ratio (surface coverage ratio) of the surface area covered by the manifold covering members 30 to the total surface area of the manifolds 20 provided on all of the middle frame elements (elements other than the cathode terminal element 51c and the anode terminal element 51a) is preferably 13 to 100% , more preferably 25 to 100%, and even more preferably 50 to 100%, from the viewpoints of suppression of impurity gas generation caused by the leakage current and maintainability.

In particular, the ratio (surface coverage ratio) of the surface area covered by the manifold covering member 30 to the surface area of the manifold 20 provided on each medium frame element is preferably 13 to 100%, more preferably 25 to 100%, and even more preferably 50 to 100%, from the viewpoint of the suppression effect of generation of impurity gases caused by the leakage current and maintainability.

Note that the above surface coverage ratio shall be calculated for the surface of the manifold 20 excluding the openings for the thin tubes leading to the electrode compartments. In addition, the inlet piping and the outlet piping connected to the terminal element shall not be included in the manifold 20.

FIG. 4B illustrates one example of the state where the manifold covering member 30 integrated with gasket 7 and the resin spacer 40 described above are attached to the bipolar electrolysis element 60. In FIG. 4B, the surface of the anode outlet header portion 20ao is fully (100%) covered by the manifold covering member 30 (30ao).

A manifold covering member 30 integrated with the gasket(s) 7 is preferably attached to at least one element from the viewpoint of preventing the generation of impurity gases caused by the leakage current, more preferably attached to at least the cathode terminal element 51c, even more preferably attached to at least the cathode terminal element 51c and the anode terminal element 51a, further more preferably attached to at least the cathode terminal element 51c, the anode terminal element 51a, and some of the middle frame elements, and particularly preferably attached to all elements.

The material of the manifold covering member 30 is not particularly limited, but similar to the gasket 7, it preferably includes at least an insulating material having insulating properties such as a known rubber material or resin material.

Specific examples of the manifold covering member 30 include: rubber materials such as natural rubber (NR), styrene butadiene rubber (SBR), chloroprene rubber (CR), butadiene rubber (BR), acrylonitrile-butadiene rubber (NBR), silicone rubber (SR), ethylene-propylene rubber (EPT), ethylene-propylene-diene rubber (EPDM), fluoro rubber (FR), isobutylene-isoprene rubber (IIR), urethane rubber (UR), and chlorosulfonated polyethylene rubber (CSM); fluororesin materials such as PTFE, PFA, ETFE, and chlorotrifluoroethylene-ethylene copolymer (ECTFE); and resin materials such as polyphenylene sulfide (PPS), polyethylene, polyimide, and polyacetal. One of these materials may be used individually, or two or more of these materials may be used together. From the viewpoint of ease of fabrication of the member and alkali resistance, it is preferable that it is made of at least one material selected from the group consisting of a rubber material and polytetrafluoroethylene (PTFE). A rubber material is more preferred, and EPDM or FR is particularly preferred, because they are less prone to cracking than resin materials and have good creep properties and are therefore more durable, and are softer than polytetrafluoroethylene (PTFE) and have better followability when covering the surface of the manifold.

The elastic modulus of the manifold covering member 30 is not particularly limited and may be designed in accordance with the shape of the manifold 20 and the material of the gasket 7. The preferred range of the elastic modulus is the range of 0.20 to 20 MPa in terms of tensile stress at 100% deformation. The range of 1.0 to 10 MPa is more preferred, and the range of 1.0 to 5.0 MPa is even more preferred from the viewpoint of followability when covering the surface of the manifold 20 and the strength of the member.

Note that the tensile stress can be measured in accordance with JIS K6251. For example, an Autograph AG manufactured by Shimadzu Corporation may be used. The test temperature shall be in accordance with 6.1 (standard temperature of the test room: 23 + 2 °C) of JIS K 6250.

The thickness of the manifold covering member 30 is not particularly limited and may be determined according to the size of the manifold 20, the thickness of the gasket 7, etc. From the viewpoint of ease of production and handling of the member, it is preferably 0.5 to 10 mm, more preferably 1.0 to 8.0 mm, and even more preferably 2.0 to 6.0 mm.

The method of fabricating the manifold covering member 30 integrated with the gasket 7 is not limited and existing methods may be used. For example, the gasket 7 and the manifold covering member 30 may be molded as a single piece in a mold, or the gasket 7 and the manifold covering member 30 may be joined together after they have been manufactured separately.

Next, the components of the electrolysis apparatus 70 other than the bipolar electrolyzer 50 will be primarily described.

### - Liquid feed pump -

The liquid feed pump 71 is not particularly limited and may be configured as appropriate.

A cathode-side liquid feed pump for feeding to the cathode compartment 5c and an anode-side liquid feed pump for feeding to the anode compartment 5a may be provided as the liquid feed pump 71 that can be used for the electrolysis apparatus 70 of the present embodiment, and they can be operated separately.

### - Gas-liquid separation tank -

The gas-liquid separation tank 72 includes a hydrogen separation tank 72h that separates the electrolyte from the hydrogen gas and an oxygen separation tank 72o that separates the electrolyte from the oxygen gas.

The hydrogen separation tank 72h is connected to the cathode compartment 5c and the oxygen separation tank 72o is connected to the anode compartment 5a for use.

### - Water replenisher -

The water replenisher used in the electrolysis apparatus 70 is not particularly limited, and may be appropriately determined.

The water may be general tap water. Nevertheless, when a long-term operation is taken into consideration, ion-exchanged water, RO water, ultrapure water, or the like is preferably used.

### - Electrolysis power supply -

The electrolysis apparatus 70 has an electrolysis power supply (rectifier) 74. Furthermore, an electrical circuit may be formed that includes the bipolar electrolyzer 50 and the electrolysis power supply 74. In addition, the electrolysis apparatus 70 may also have an external load connected to the bipolar electrolyzer 50. In particular, in the present embodiment, an electrical circuit and an external load are preferably provided.

Specifically, in the example in FIG. 1, the anode 2a of the electrolysis cell 65, which is an end in the bipolar electrolyzer 50, may be connected to the positive electrode of the electrolysis power supply 74 with a cable, and the cathode 2c of the electrolysis cell 65, which is an end in the bipolar electrolyzer 50, may be connected to the negative electrode of the electrolysis power supply 74 with a cable, and the cables may be connected by a switch and the external load. This allows, for example, a circuit to be formed between the bipolar electrolyzer 50 (all electrolysis cells 65) and the external load when the switch is closed while the electrolysis power supply 74 is stopped in the stopped step. Furthermore, the external load may be connected to all of the electrolysis cells 65 of the bipolar electrolyzer 50, or may be connected to some of the electrolysis cells 65. This allows, for example, a circuit to be formed between some of the electrolysis cells 65 of the bipolar electrolyzer 50 and the external load in the stopped step.

### - Storage tank -

The electrolysis apparatus 70 may include a storage tank for storing the electrolyte. The storage tank is preferably positioned above the bipolar electrolyzer 50 in the vertical direction. When the storage tank is connected to the bipolar electrolyzer 50 by piping or the like, the electrolyte in the storage tank can be injected into the electrolyzer by means of gravity. Further, the flow rate can be appropriately adjusted by providing a valve or the like in the piping or the like.

### - Inlet/outlet piping -

The electrolysis apparatus 70 has inlet piping that supplies the electrolyte to the bipolar electrolyzer 50 and outlet piping that discharges the electrolyte from the bipolar electrolyzer 50, and each piping is connected to a storage tank and the like. The inlet piping and the outlet piping may be provided with a valve and other devices to properly regulate the flow of the electrolyte.

Both the inlet piping and the outlet piping are preferably connected to the anode terminal element 51a of the bipolar electrolyzer 50 from the viewpoint of suppressing deterioration of the gas purities caused by the leakage current.

### - Others -

The electrolysis apparatus 70 may include an oxygen concentration meter 75, a hydrogen concentration meter 76, flow meters 77, pressure gauges 78, a heat exchanger 79, and pressure control valves 80, in addition to the bipolar electrolyzer 50, the liquid feed pump 71, the gas-liquid separation tank 72, the water supply unit, the electrolysis power supply 74, the storage tank, the inlet piping, and the outlet piping (see FIG. 1).

Further, the electrolysis apparatus 70 preferably further includes a detector for detecting that feeding of electric power is stopped and a controller for automatically stopping the liquid feed pump 71. With the detector and the controller, the influence of self-discharging can be efficiently reduced under a fluctuating power supply such as renewable energy without artificial manipulation.

### (Method of producing hydrogen)

A method of producing hydrogen of the present embodiment can be carried out by electrolyzing water using the electrolysis apparatus 70 of the present embodiment.

In the present embodiment, the electrolysis apparatus 70 of the present embodiment can be used without problems under a power supply with a continuously varying current density at a current density of 0 to 20 kA/m² and an electrolysis temperature of 0 to 120 °C.

On the other hand, in the method of producing hydrogen of the present embodiment, the temperature of the electrolyte in the electrolysis cell 65 is preferably 40 °C or higher, more preferably 70 °C or higher, and is preferably 110 °C or lower, more preferably at 95 °C or lower.

With the aforementioned temperature range, the members of the electrolysis apparatus 70 can be effectively prevented from being deteriorated while high electrolysis efficiency is maintained.

Furthermore, in the method of producing hydrogen of the present embodiment, the current density applied to the electrolysis cell 65 is not particularly limited but is preferably 0.1 kA/m² to 20 kA/m², and more preferably 0.5 kA/m² to 15 kA/m².

In particular, when the fluctuating power supply is used, it is preferable that the upper limit of the current density is the aforementioned range.

In the following, preferable conditions for the method of producing hydrogen according to the present embodiment will be described.

The electrolyte used for the present embodiment may be an alkaline aqueous solution in which alkaline salt is dissolved, and examples of which include NaOH aqueous solution, KOH aqueous solution, or the like.

Alkaline salt concentration may preferably be 10 to 50 mass%, and more preferably be 15 to 40 mass%. In the present embodiment, KOH aqueous solution of 25 to 40 mass% is particularly preferable in terms of ion conductivity, kinetic viscosity, and freezing in cold temperatures.

In the method of producing hydrogen of the present embodiment, the pressure within the electrolysis cell 65 is preferably 3 kPa or more, more preferably 70 kPa or more, and even more preferably 200 kPa or more, from the viewpoint of the compressor load. From the viewpoint of the purities of gases, it is preferably 4000 kPa or less, more preferably 1000 kPa or less, and even more preferably 800 kPa or less.

Although the electrolysis apparatus 70 having the configuration as illustrated in FIG. 1 can be manufactured using the above-described components of the electrolysis apparatus 70 in the present embodiment, for example, this is not limitative.

The method of producing hydrogen of the present embodiment may use electricity with fluctuation of the load and may vary the electrolytic current according to the fluctuation of the load.

The above-mentioned effects of the method of producing hydrogen of the present embodiment become more pronounced by using a power supply (variable power supply) relying on at least one renewable energy output selected from the group consisting of wind, solar, hydraulic, tidal, wave, ocean current, and geothermal power outputs.

When a variable power supply as described above is used, specifically, a current density ranging from low current densities to high current densities is randomly applied to the electrolysis apparatus 70, and the hydrogen concentration in oxygen deteriorates especially at low current densities. However, the method of producing hydrogen of the present embodiment makes it possible to suppress the deterioration of the hydrogen concentration in oxygen.

### EXAMPLES

The following describes the present disclosure in more detail through examples. However, the present disclosure is not in any way limited by the following examples.

Measurement methods and valuation methods used in the examples and comparative examples are described below.

### (1) Cell voltage

Alkaline water electrolysis was carried out by continued application of a current density of 10 kA/m² for 2 hours. After 2 hours, the average value of the pair voltages of the electrolysis cell was calculated, which was evaluated as the cell voltage (V).

### (2) Gas purity

Alkaline water electrolysis was carried out by continued application of a current density of 1 kA/m² for 6 hours. After 6 hours, the value of hydrogen concentration in oxygen (%) obtained by alkaline water electrolysis was measured by gas chromatography. A lower concentration of hydrogen in oxygen is preferable because it is outside the explosion range (the range of concentration of the gas mixture of hydrogen and oxygen in which an explosion occurs when a fire source is brought closer).

The following evaluation criteria were also used.

### [Evaluation criteria]

⊚ (Excellent): Hydrogen concentration in oxygen was 0.5% or less
O (Good): Hydrogen concentration in oxygen was more than 0.5% and 1% or less
X (Poor): Hydrogen concentration in oxygen was more than 1%.

### (3) Long-term retention of gas purity

Alkaline water electrolysis was carried out by continued application of a current density of 10 kA/m² for 1000 hours. Alkaline water electrolysis was then performed by continued application of a current density of 1 kA/m² for 6 hours. After 6 hours, the value of hydrogen concentration in oxygen (%) obtained by alkaline water electrolysis was measured by gas chromatography.

The following evaluation criteria were also used.

### [Evaluation criteria]

⊚ (Excellent): Hydrogen concentration in oxygen was 0.5% or less
O (Good): Hydrogen concentration in oxygen was more than 0.5% and less than 1%.
X (Poor): Hydrogen concentration in oxygen was more than 1%.

### (4) Maintainability

The maintainability of the electrolyzer was evaluated according to the following evaluation criteria.

### [Evaluation criteria]

⊚ (Excellent): Maintenance could be performed by replacing only the gaskets integrated with the manifold covering member and the number of gaskets integrated with the manifold covering member was 2 or less.
O (Good): Maintenance could be performed by replacing only the gaskets integrated with the manifold covering member and the number of gaskets integrated with the manifold covering member was more than 2
x (Poor): The entire electrolyzer needed to be replaced due to interfacial delamination of the resin coating, etc.

### [Example 1]

A bipolar alkaline water electrolysis element and an alkaline water electrolysis apparatus using the same were produced as follows.

### - Partition wall and outer frame -

An element including a partition wall partitioning an anode and a cathode and an outer frame bordering the partition wall was used as a bipolar alkaline water electrolysis element. Those members in contact with electrolyte such as the partition wall and the outer frame were all made of nickel.

### - Anode -

As the anode, a nickel-expanded metal substrate that had been blasted in advance was used, and granulated products of nickel oxide were sprayed onto both surfaces of the conductive substrate by a plasma spraying method to produce the anode.

### - Cathode -

A platinum-carrying plain weave mesh substrate produced from woven fine wires of nickel having a diameter of 0.15 mm with a mesh count of 40 mesh was used as the conductive substrate.

### - Diaphragm-

Zirfon Perl UTP500 manufactured by Agfa was used as the diaphragm.

### - Zero-gap structure -

The elements were stacked having gaskets interposed therebetween to assemble a bipolar alkaline water electrolyzer so that the anode and the cathode were brought into contact by pressing from both sides of the diaphragm to form a zero-gap structure. The gaskets used were integrated with manifold covering members and held the diaphragms.

Only the anode was disposed on the anode side whereas a cathode structure composed of a combination of "cathode - conductive elastic body - current collector" was disposed on the cathode side.

As a collector, a nickel expanded metal substrate that had been subjected to blasting in advance was used. The substrate had a thickness of 1 mm and an open fraction of 54%.

As the conductive elastic body, a woven metal fabric of nickel wires having a wire diameter of 0.15 mm was corrugated so as to have a corrugation height of 5 mm.

The conductive elastic body was secured to the current collector by spot welding.

The anode and the cathode as described above were used.

### - Bipolar alkaline water electrolyzer and bipolar alkaline water electrolysis element

An anode terminal element, a cathode terminal element, and ten bipolar alkaline water electrolysis elements were used. As illustrated in FIG. 2, a fast head, an insulating plate, and an anode terminal element were arranged on one end, 10 sets of an anode side gasket portion, a diaphragm, a cathode side gasket portion, and a bipolar alkaline water electrolysis element arranged in this order, were then arranged. A cathode terminal element, an insulating plate, and a loose head were arranged on the other end. The stack was then tightened by applying pressure from both of the fast head side and the loose head side at a sealing surface pressure of 2.5 MPa on the gaskets to assemble a bipolar alkaline water electrolyzer. This bipolar alkaline water electrolyzer had a series connection structure composed of 10 pairs of a cathode compartment and an anode compartment.

### - Manifold -

A manifold made of nickel was used as an internal manifold-type bipolar alkaline water electrolysis element. As illustrated in FIGS. 3 and 4, this manifold was configured so that all header portions (anode inlet header portion, cathode inlet header portion, anode outlet header portion, and cathode outlet header portion) extended in the direction perpendicular to the partition wall (extended along the stack direction).

### - Gasket -

The gasket was made of EPDM and had an elastic modulus at 100% deformation of 4.0 MPa and a thickness of 4.0 mm. This gasket had dimensions of the opening in plan view that matched those of the electrode compartment of the cell frame, and it had a slit structure with a thickness of 0.4 mm in the central portion of the inner wall of the opening to hold the diaphragm in place.

The middle frame gasket was configured to have an anode inlet manifold covering member covering the anode inlet header portion and an anode outlet manifold covering member covering the anode outlet header portion of the manifold on one side, and a cathode inlet manifold covering member covering the cathode inlet header portion and a cathode outlet manifold covering member covering the cathode outlet header portion of the manifold on the other side.

The anode terminal gasket was configured to have an anode inlet manifold covering member covering the anode inlet header portion, an anode outlet manifold covering member covering the anode outlet header portion, a cathode inlet manifold covering member covering the cathode inlet header portion, and a cathode outlet manifold covering member covering the cathode outlet header portion of the manifold, on the side that contacted with the anode terminal element, as well as having an anode inlet manifold covering member covering the anode inlet header portion and an anode outlet manifold covering member covering the anode outlet header portion of the manifold on the other side.

The cathode terminal gasket was configured to have a cathode inlet manifold covering member covering the cathode inlet header portion and a cathode outlet manifold covering member covering the cathode outlet header portion of the manifold on both sides. The gasket portion that contacted with the anode manifold (anode inlet header portion and anode outlet header portion) adjacent to the cathode terminal element did not have any opening and was blocked, ensuring that the electrolyte did not come into contact with the cathode terminal element at that particular portion.

The thickness of each manifold covering member was 3.0 mm. EPDM (having an elastic modulus at 100% deformation of 4.0 MPa) was used as the material of each manifold covering member.

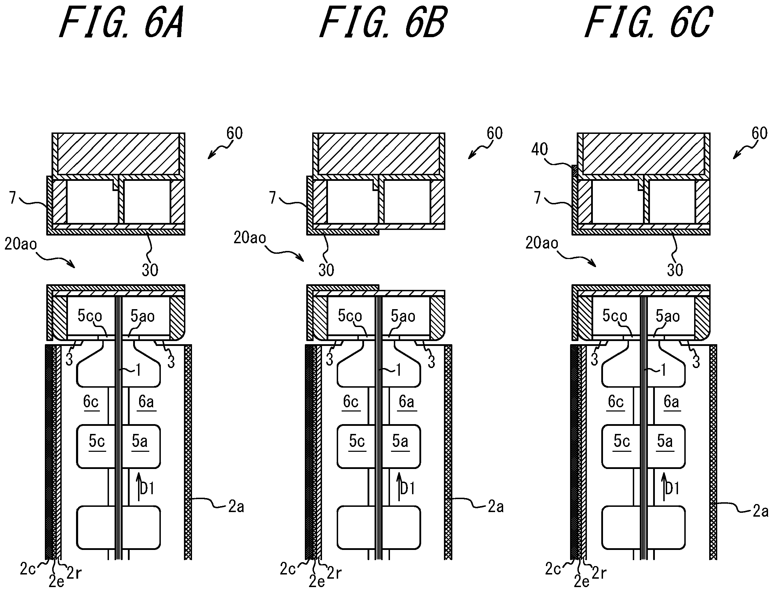

The anode terminal gasket was disposed between the anode terminal element and the adjacent element thereof, the cathode terminal gasket was disposed between the cathode terminal element and the adjacent element thereof, and the middle frame gaskets were disposed between the middle frame elements. At this time, a manifold covering member corresponding to each header portion was inserted, and each header portion was covered with the corresponding manifold covering member (FIG. 6A illustrates the installation state of a middle frame gasket). At this time, an adhesive was used to fix the manifold covering members.

The manifold surface coverage ratios of all of the manifold covering members were 100%.

In this manner, an internal manifold-type bipolar alkaline water electrolyzer was fabricated.

The alkaline water electrolysis apparatus as illustrated in FIG. 1 was produced by using a feed pump, a gas-liquid separation tank, a water replenisher, or the like, all of which have been commonly used in the art. Note that both the inlet piping and the outlet piping connected to the storage tank were connected to the anode terminal element.

The electrolyte was caused to flow from the cathode inlet header portion to the cathode compartment and from the cathode compartment to the cathode outlet header portion. In addition, the electrolyte was caused to flow from the anode inlet header portion to the anode compartment and from the anode compartment to the anode outlet header portion.

The cathode inlet header portion was connected to one end side on the lower side of an outer frame which was rectangular in plan view, and the cathode outlet header portion was connected to the upper side of the side extending to the other end side on the lower side of the outer frame which was the rectangular in plan view (see FIG. 3). Here, the cathode inlet header portion and the cathode outlet header portion were disposed so that they faced each other across the center of the electrode compartment in a rectangular electrolysis chamber in plan view. The electrolyte flowed from down to up with an inclination relative to the vertical direction, and rose along the electrode surface.

This example of a bipolar electrolyzer was configured to have a structure in which the electrolyte flowed into the anode compartment and the cathode compartment from the electrolyte inlets of the anode compartment and the cathode compartment, and the electrolyte and the product gas flowed out of the bipolar electrolyzer from the electrolyte outlets of the anode compartment and the cathode compartment.

Since electrolysis produced hydrogen gas in the cathode compartment and oxygen gas in the anode compartment, there was formed a mixed-phase flow of the electrolyte and the hydrogen gas in the cathode outlet header portion and a mixed-phase flow of the electrolyte and the oxygen gas in the anode outlet header portion.

The method of producing hydrogen by using the alkaline water electrolysis apparatus was conducted under the following conditions.

The 30% KOH aqueous solution was used as an electrolyte.

A current was conducted from the electrolysis power supply (rectifier) to the bipolar alkaline water electrolyzer to achieve the desired current density for the areas of the cathode and the anode of the bipolar alkaline water electrolyzer. The temperature adjustment was carried out by a heat exchanger so that the temperature at the outlet side of the electrolyzer was 90 °C.

Circulation of the anode compartment, the oxygen separation tank (a gas-liquid separation tank for anode) and the anode compartment, and circulation of the cathode compartment, the hydrogen separation tank (a gas-liquid separation tank for cathode), and the cathode compartment were conducted by a liquid feed pump.

The pressure in the electrolyzer after the start of current conduction was measured with a pressure gauge and adjusted so that the cathode (hydrogen gas) side pressure was 50 kPa and the anode (oxygen gas) side pressure was 49 kPa. The pressure regulation was achieved by control valves installed downstream to the pressure gauges.

### [Example 2]

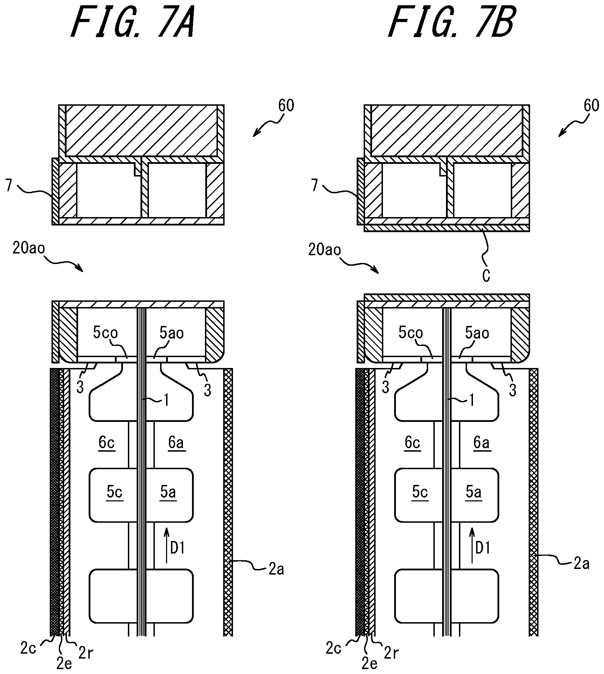

An alkaline water electrolysis apparatus was fabricated in a similar manner to Example 1, except that gaskets integrated with manifold covering members, which were the same as those in Example 1, were used only between the cathode terminal element and the adjacent element thereof, as well as between the anode terminal element and the adjacent element thereof. For the remaining elements (middle frame elements), middle frame gaskets without manifold covering members (FIG. 7A illustrates the installation state of a middle frame gasket without a manifold covering member) were used, (i.e., the manifolds were not covered with manifold covering members.)

### [Example 3]

An alkaline water electrolysis apparatus was fabricated in a similar manner to Example 1, except that gaskets with manifold covering members having a manifold surface coverage ratio of 50% were used between the cathode terminal element and the adjacent element thereof, as well as between the anode terminal element and the adjacent element thereof. For the remaining elements (middle frame elements), middle frame gaskets with manifold covering members having a manifold surface coverage ratio of 50% (FIG. 6B illustrates the installation state of a middle frame gasket) were used.

### [Example 4]

An alkaline water electrolysis apparatus was fabricated in a similar manner to Example 1, except that resin spacers were placed on the outside of the gaskets integrated with the manifold covering members (FIG. 6C illustrates the installation state of a middle frame gasket and a resin spacer).

The use of resin spacers allowed the pressure in the electrolysis cell during electrolysis operation to be increased to 800 kPa, which was higher than the pressure in Example 1.

### [Example 5]

An alkaline water electrolysis apparatus was fabricated in a similar manner to Example 1, except that PTFE (with an elastic modulus at 100% deformation of 9.0 MPa) was used as the material of each manifold covering member.

The low cell voltage exhibited in Examples 1 to 5 indicated that hydrogen was able to be produced efficiently.

In Example 1, all surfaces of the manifold were protected by a manifold covering member, which suppressed the generation of impurity gases caused by the leakage current and resulted in low hydrogen concentration in oxygen and high gas purity at low current density. Furthermore, high gas purity was maintained even after long-term use. Additionally, there was no need for replacement of the entire electrolyzer, giving high maintainability.

In Example 2, the gaskets integrated with the manifold covering members were used only between the terminal elements and the adjacent elements thereof. Although not as effective as Example 1, there was still an effect of suppression of generation of impurity gases caused by the leakage current, resulting in high gas purity. Furthermore, high gas purity was maintained even after long-term use. Additionally, there was no need for replacement of the entire electrolyzer and the electrolyzer was easier to assemble because the number of gaskets integrated with the manifold covering member was smaller, giving high maintainability.

In Example 3, the gaskets with a manifold covering member having a manifold surface coverage ratio of 50% were used. Although not as effective as Example 1, there was still an effect of suppression of generation of impurity gases caused by the leakage current, resulting in high gas purity. Furthermore, high gas purity was maintained even after long-term use. Additionally, there was no need for replacement of the entire electrolyzer, giving high maintainability.

In Example 4, the resin spacers were used. The pressure in the electrolysis cell during electrolysis operation could be increased to a high value, and the generation of impurity gases caused by the leakage current was suppressed and gas purity was high also in this case. Furthermore, high gas purity was maintained even after long-term use. Additionally, there was no need for replacement of the entire electrolyzer, giving high maintainability.

In Example 5, PTFE was used as the material of the manifold covering members. Although not as effective as in Example 1, where EPDM was used as the material of the manifold covering members, there was still an effect of suppression of generation of impurity gases caused by the leakage current, resulting in high gas purity also in this case. Furthermore, although a slight deterioration of gas purity was observed after long-term use, the gas purity was maintained without any problems in practical use. Additionally, there was no need for replacement of the entire electrolyzer, giving high maintainability.

### [Comparative Example 1]

An alkaline water electrolysis apparatus was fabricated in a manner similar to Example 1, except that gaskets without manifold covering members were used between all elements (in other words, the manifolds were not covered with manifold covering members) (FIG. 7A illustrates the installation state of a middle frame gasket without a manifold covering member).

Since the metal surfaces that were not protected by the manifold covering member were exposed on the entire surfaces of the manifolds, the concentration of hydrogen in oxygen deteriorated and the gas purity deteriorated, both at the beginning of the electrolysis and over the long term, compared to the examples.

### [Comparative Example 2]

An alkaline water electrolysis apparatus was fabricated in a manner similar to Example 1, except that the surface of all manifolds (header portions) was covered with PTFE according to the method disclosed in JP 6404685 B, and gaskets without manifold covering members were used (FIG. 7B illustrates the installation state of a middle frame gasket without a manifold covering member and PTFE coating).

Since the surface of the manifold was protected by a coating material, the generation of impurity gases caused by the leakage current was suppressed at the beginning of electrolysis, resulting in a low concentration of hydrogen in oxygen and high gas purity. However, the high gas purity was not retained because the coating material was peeled off during long-term use.

In addition, the entire electrolyzer had to be replaced to repair the peeled coating material, resulting in low maintainability.

**[Table 1]**

| | | | | Examples | | | | | Comparative Example | |
|---|---|---|---|---|---|---|---|---|---|---|
| | | | | 1 | 2 | 3 | 4 | 5 | 1 | 2 |
| Structure | Use of manifold covering member | Middle frame element | - | Yes | No | Yes | Yes | Yes | No | No (resin coating) |
| | | Cathode terminal element | - | Yes | Yes | Yes | Yes | Yes | No | No (resin coating) |
| | | Anode terminal element | - | Yes | Yes | Yes | Yes | Yes | No | No (resin coating) |
| | Surface coverage ratio by manifold covering member | Middle frame element | % | 100 | - | 50 | 100 | 100 | - | - |
| | | Cathode terminal element | % | 100 | 100 | 50 | 100 | 100 | - | - |
| | | Anode terminal element | % | 100 | 100 | 50 | 100 | 100 | - | - |
| | Material of manifold covering member | | - | EPDM | EPDM | EPDM | EPDM | PTFE | - | - |
| | Use of resin spacer | | - | No | No | No | Yes | No | No | No |
| Performance | Cell voltage | Cell voltage | V | 1.90 | 1.91 | 1.90 | 1.89 | 1.91 | 1.90 | 1.91 |
| | Gas purity | Hydrogen concentration in oxygen | % | 0.4 | 0.5 | 0.6 | 0.8 | 0.9 | 1.8 | 0.4 |
| | | Evaluation | - | ⊚ | ⊚ | O | O | O | X | ⊚ |
| | Long-term retention of gas purity | Hydrogen concentration in oxygen | % | 0.4 | 0.5 | 0.6 | 0.8 | 1.0 | 1.8 | 1.5 |
| | | Evaluation | - | ⊚ | ⊚ | O | O | O | X | X |
| | Maintainability | | - | O | ⊚ | O | O | O | - | X |

### INDUSTRIAL APPLICABILITY

According to the electrolyzer including the internal manifold-type bipolar electrolysis element of the present disclosure, the generation of impurity gases caused by the leakage current can be suppressed, the output can be controlled by varying the electrolysis current according to the fluctuation of the load, and high efficiency and production of high purity hydrogen can be retained for a long time. In addition, it is suitably used for the production of hydrogen by electrolysis (electrolysis of water, especially alkaline water electrolysis) because working time is significantly reduced, and the electrolysis shutdown period is minimized, not to mention that industrial production can be easily achieved, maintenance of components is facilitated, the replacement of the entire electrolyzer frame is not required.

### REFERENCE SIGNS LIST

- 1: Partition wall
- 2: Electrode
- 2a: Anode
- 2c: Cathode
- 2e: Conductive elastic body
- 2r: Current collector
- 3: Outer frame
- 4: Diaphragm
- 5: Electrode compartment
- 5a: Anode compartment
- 5c: Cathode compartment
- 5i: Electrolyte inlet
- So: Electrolyte outlet
- 5ai: Anode electrolyte inlet
- 5ao: Anode electrolyte outlet
- 5ci: Cathode Electrolyte inlet
- 5co: Cathode Electrolyte outlet
- 6: Baffling plate
- 6a: Anode baffling plate (anode rib)
- 6c: Cathode baffling plate (cathode rib)
- 7: Gasket
- 20: Manifold
- 20i: Inlet header portion
- 20ai: Anode inlet header portion
- 20ci: Cathode inlet header portion
- 20o: Outlet header portion
- 20ao: Anode outlet header portion
- 20co: Cathode outlet header portion
- 30: Manifold covering member
- 30ai: Anode inlet manifold covering member
- 30ci: Cathode inlet manifold covering member
- 30ao: Anode outlet manifold covering member
- 30co: Cathode outlet manifold covering member
- 40: Resin spacer
- 50: Bipolar electrolyzer
- 51g: Fast head, loose head
- 51a: Anode terminal element
- 51c: Cathode terminal element
- 51r: Tie rod
- 51i: Insulating plate
- 60: Bipolar electrolysis element
- 65: Electrolysis cell
- 70: Electrolysis apparatus
- 71: Liquid feed pump
- 72: Gas-Liquid separation tank
- 72h: Hydrogen separation tank
- 72o: Oxygen separation tank
- 74: Electrolysis power supply
- 75: Oxygen concentration meter
- 76: Hydrogen concentration meter
- 77: Flow meter
- 78: Pressure gauge
- 79: Heat exchanger
- 80: Pressure control valve
- D1: Given direction along partition (vertical direction)
- Z: Zero-gap structure
- C: Resin coating

## Claims

1. An internal manifold-type bipolar electrolysis element structured from an anode, a cathode, a partition wall, and an outer frame, and comprising a manifold,
at least a part of a surface of the manifold being covered with a manifold covering member, and
the manifold covering member being integrated with a gasket.

2. The internal manifold-type bipolar electrolysis element according to claim 1, being an internal manifold-type bipolar water electrolysis element.

3. The internal manifold-type bipolar electrolysis element according to claim 1, being an internal manifold-type bipolar alkaline water electrolysis element.

4. The internal manifold-type bipolar electrolysis element according to any one of claims 1 to 3, wherein at least a part of surfaces of manifolds of a cathode terminal element and an anode terminal element is covered with the manifold covering member.

5. The internal manifold-type bipolar electrolysis element according to any one of claims 1 to 3, wherein the manifold covering member is detachable.

6. The internal manifold-type bipolar electrolysis element according to any one of claims 1 to 3, wherein the manifold covering member is made of at least an insulating material.

7. The internal manifold-type bipolar electrolysis element according to any one of claims 1 to 3, wherein the manifold covering member is made of at least one material selected from the group consisting of a rubber material and polytetrafluoroethylene.

8. The internal manifold-type bipolar electrolysis element according to any one of claims 1 to 3, wherein the manifold covering member is made of a rubber material.

9. The internal manifold-type bipolar electrolysis element according to any one of claims 1 to 3, wherein a resin spacer is disposed outside of the gasket and a compressive elastic modulus of the resin spacer is greater than a compressive elastic modulus of the gasket.

10. An internal manifold-type bipolar electrolyzer comprising the internal manifold-type bipolar electrolysis element according to any one of claims 1 to 3 and a diaphragm stacked via the gasket to form an electrolysis cell.

11. The internal manifold-type bipolar electrolyzer according to claim 10, wherein the manifold is disposed outside of the diaphragm.

12. The internal manifold-type bipolar electrolyzer according to claim 10, wherein inlet piping and outlet piping are connected to the anode terminal element.

13. A method of producing hydrogen comprising using the internal manifold-type bipolar electrolyzer according to claim 10.

14. The method of producing hydrogen according to claim 13, wherein a pressure in the electrolysis cell during electrolysis operation is 3 to 4000 kPa.

15. The method of producing hydrogen according to claim 13 or 14, wherein a power supply for supplying electric power is a power supply relying on at least one renewable energy output selected from the group consisting of wind, solar, hydraulic, tidal, wave, ocean current, and geothermal power outputs.

16. A gasket to be incorporated in an internal manifold-type bipolar electrolyzer comprising a manifold,
at least a part of a surface of the manifold being covered with a manifold covering member, and
the gasket being integrated with the manifold covering member.

17. A gasket to be incorporated in an internal manifold-type bipolar alkaline water electrolyzer comprising a manifold,
at least a part of a surface of the manifold being covered with a manifold covering member, and
the gasket being integrated with the manifold covering member.

18. The gasket according to claim 16 or 17, wherein the manifold covering member is made of at least one material selected from the group consisting of a rubber material and polytetrafluoroethylene.

19. The gasket according to claim 16 or 17, wherein the manifold covering member is made of a rubber material.
